# EUROPEAN PATENT APPLICATION

(11) **EP 4 773 410 A1**
(43) Date of publication of application: **08.07.2026**
(21) Application number: 25847086.3
(22) Date of filing: 30.07.2025
(51) Int. Cl.: H01M 50/533, H01M 50/105, H01M 10/0585

(54) **SECONDARY BATTERY AND ELECTRONIC DEVICE**

(30) Priority: 30.07.2024 CN 202411034844
(71) Applicant: Ningde Amperex Technology Limited, Ningde, Fujian 352100 (CN)
(72) Inventor: LI, Sheng, Ningde, Fujian 352100 (CN)
(74) Representative: Kraus & Lederer PartGmbB
(86) International application number: PCT/CN2025/111443
(87) International publication number: WO 2026/026839

(57) **Abstract**

A secondary battery and an electronic device are provided. The secondary battery includes an electrode assembly, a housing and a first tab assembly. The electrode assembly includes first electrode plates, second electrode plates, and separators. The electrode assembly is formed by stacking the first electrode plates, the separators and the second electrode plates along a first direction. The first direction is a thickness direction of the electrode assembly. The electrode assembly includes a plurality of sequentially connected side faces, one of which is a first side face and another is a second side face. The electrode assembly is accommodated in the housing. The first tab assembly includes a plurality of first tabs and a second tab. The plurality of first tabs extend out of the first side face, the plurality of first tabs are respectively connected to the first electrode plates, and the plurality of first tabs are electrically connected to each other and accommodated in the housing. The second tab extends out of the second side face along a second direction, one end of the second tab is connected to one first electrode plate, and the other end of the second tab extends out of the housing. The above secondary battery is conducive to improving the energy density.

## Description

This application claims priority to Chinese Patent Application No. 202411034844.8, filed with the China National Intellectual Property Administration on July 30, 2024 and entitled "SECONDARY BATTERY AND ELECTRONIC DEVICE", which is incorporated herein by reference in its entirety.

### TECHNICAL FIELD

This application relates to the field of energy storage technologies, and in particular, to a secondary battery and an electronic device.

### BACKGROUND

Stacked battery cells are widely used in the field of lithium-ion batteries due to high energy density, low internal resistance, long service life, etc. During the preparation of the stacked battery cells, a plurality of layers of tabs need to be connected to tab leads through transfer welding and then bent to be led out. At a head of a battery, defined as a position where the tabs extend out of a housing, a welding region and a bending region of occupy a large space, resulting in reduced energy density of the battery.

### SUMMARY

In view of the above condition, this application provides a secondary battery, which is conducive to improving an energy density.

An embodiment of this application provides a secondary battery. The secondary battery includes an electrode assembly, a housing and a first tab assembly. The electrode assembly includes first electrode plates, second electrode plates and separators. Each separator is disposed between the corresponding first electrode plate and the corresponding second electrode plate. The electrode assembly is formed by stacking the first electrode plates, the separators and the second electrode plates along a first direction. The first direction is a thickness direction of the electrode assembly. The electrode assembly includes a plurality of sequentially connected side faces, one of which is a first side face and another is a second side face. The electrode assembly is accommodated in the housing. The first tab assembly includes a plurality of first tabs and a second tab. The plurality of first tabs extend out of the first side face, the plurality of first tabs are respectively connected to the first electrode plates, and the plurality of first tabs are electrically connected to each other and accommodated in the housing. The second tab extends out of the second side face along a second direction, one end of the second tab is connected to one first electrode plate, and the other end of the second tab extends out of the housing. The second direction is perpendicular to the first direction.

In the above secondary battery, the second tab and the second side face are located at a head of the secondary battery, the first side face and the plurality of first tabs are spaced apart from the head of the secondary battery, the second tab and the plurality of first tabs are electrically connected through the first electrode plates, and the second tab extends out of the housing from the second side face without bending, thereby reducing spatial waste caused by transfer welding at the head of the secondary battery, which is conducive to improving spatial utilization efficiency at the head of the secondary battery and further improving the energy density of the secondary battery.

In some embodiments of this application, the plurality of first tabs are integrally formed with the first electrode plates to improve the connection stability between the first tabs and the corresponding first electrode plates, which is conducive to reducing internal resistance and has the advantage of simplified manufacturing processes.

In some embodiments of this application, each first electrode plate includes a first current collector and a first active material layer, and the first active material layer is disposed on at least one surface in the first direction of the first current collector. The first active material layer is provided with a first groove exposing the first current collector, and one end of the second tab is located in the first groove and connected to the first current collector. The second tab shares the space in the first direction with the first active material layer to improve the spatial utilization efficiency at the head of the secondary battery, thereby improving the energy density of the secondary battery.

In some embodiments of this application, each first electrode plate includes a first current collector and a first active material layer. The first current collector includes a first region and a second region connected to each other, the first region is closer to the second side face than the second region, the first active material layer is not disposed on both surfaces in the first direction of the first region, and the first active material layer is disposed on at least one surface in the first direction of the second region. One end of the second tab is connected to the first region so as to facilitate the connection between the second tab and the first current collector.

In some embodiments of this application, the second tab is integrally formed with the first electrode plate to improve the connection stability between the second tab and the corresponding first electrode plate, which is conducive to reducing internal resistance and has the advantage of simplified manufacturing processes.

In some embodiments of this application, the first side face and the second side face are oppositely disposed along the second direction, such that the first side face and the plurality of first tabs are located at a tail of the secondary battery, facilitating the space utilization of the tail of the secondary battery by the plurality of first tabs and improving the energy density of the secondary battery.

In some embodiments of this application, the first side face and the second side face are adjacently disposed, such that the first side face and the plurality of first tabs are located at the side of the secondary battery, facilitating the space utilization of the side portion of the secondary battery by the plurality of first tabs and improving the energy density of the secondary battery.

In some embodiments of this application, the plurality of first tabs are stacked along the first direction and bent to be disposed in the housing to reduce the space occupied by the first tabs in the second direction, thereby improving the energy density of the secondary battery.

In some embodiments of this application, the first direction, the second direction and the third direction are perpendicular to one another. In the third direction, widths of the first electrode plates and the first tabs connected to each other are W1 and W2, respectively, where 0.1 ≤ W2 / W1 ≤ 0.5, to improve the current carrying capability of the first tabs, and be conducive to reserving space on the second side face for accommodating another tab assembly with the polarity opposite to that of the first tab assembly, and reducing a risk of interference between the first tabs and another tab assembly.

In some embodiments of this application, a ratio of a length by which each first tab extends out of the first side face in an extending direction of the first tab to a thickness of the secondary battery in the first direction is less than or equal to 2, so as to facilitate a first portion and a second portion formed by single bending of gathered segments of the plurality of first tabs not to exceed the first side face in the first direction, and improve the energy density of the secondary battery.

In some embodiments of this application, the plurality of first tabs are stacked along the first direction, the ratio of the length by which each first tab extends out of the first side face in the extending direction of the first tab to the thickness of the secondary battery in the first direction is 0.5 to 2, such that the ends that are of the plurality of first tabs and that are away from the first electrode plates can be connected by welding.

In some embodiments of this application, the secondary battery further includes a plurality of first insulators, and the first insulators are disposed on at least one surface in the first direction of the first tabs to reduce a risk of short circuits caused by contact between the first tabs and the second electrode plates adjacent thereto.

In some embodiments of this application, the first insulators are insulating coatings. The insulating coatings include inorganic particles and a binder. The binder includes at least one of polyvinylidene fluoride, polyacrylonitrile, sodium carboxymethyl cellulose, polyacrylic acid, polyvinyl alcohol, or polytetrafluoroethylene. The inorganic particles include at least one of silica, boehmite, diaspore, or aluminum oxide.

In some embodiments of this application, the electrode assembly includes a first surface and a second surface, and the first surface and the second surface are oppositely disposed along the first direction. The secondary battery further includes a second insulator. One end of the second insulator is connected to the first surface, and the other end bypasses the first side face and is connected to the second surface. The second insulator further wraps the plurality of first tabs to improve structural stability of the plurality of first tabs on the first side face and improve insulation stability between the plurality of first tabs and other structural components.

In some embodiments of this application, each first electrode plate includes a first current collector and a first active material layer, and the first active material layer is disposed on at least one surface in the first direction of the first current collector. Along the first direction, a thickness of the first current collector of the first electrode plate connected to the first tab and the second tab is D1, and a thickness of the first current collector of the first electrode plate connected to the first tab but not connected to the second tab is D2, where D1 / D2 > 1. When D1 / D2 ≤ 1, the thickness of the first current collector of the first electrode plate connected to the first tab and the second tab is relatively small, resulting in weak current carrying capability and affecting the cycle performance. By defining D1 / D2 > 1, the cycle performance of the secondary battery is improved.

In some embodiments of this application, D1 / D2 ≤ 2.5. When D1 / D2 > 2.5, the thickness of the first current collector of the first electrode plate connected to the first tab and the second tab is relatively large, resulting in no significant improvement of the cycle performance and loss of the energy density. By limiting D1 / D2 ≤ 2.5, the energy density of the secondary battery is improved.

In some embodiments of this application, the thickness of the second tab is greater than that of each first tab to improve the current carrying capability of the second tab, thereby improving the stability of the electrical connection between the second tab and an external circuit.

In some embodiments of this application, along the first direction, the two first electrode plates located on the outermost two sides of the electrode assembly are a first outer electrode plate and a second outer electrode plate, respectively, and one end of the second tab is connected to the first outer electrode plate or the second outer electrode plate, so as to facilitate heat dissipation of the second tab.

In some embodiments of this application, the housing is a packaging bag, and the housing includes a body portion and a sealing portion. The electrode assembly and the plurality of first tabs are accommodated in the body portion. The body portion includes a first wall opposite to the second side face along the second direction. The sealing portion includes a first sealing edge, the first sealing edge is connected to the first wall, and the second tab extends out of the first sealing edge so as to facilitate electrical connection with the external circuit.

In some embodiments of this application, the secondary battery further includes a second tab assembly. The second tab assembly includes a plurality of third tabs and a fourth tab. The plurality of third tabs extend out of the first side face, the plurality of third tabs are respectively connected to the second electrode plates, and the plurality of third tabs are electrically connected to each other and accommodated in the housing. The fourth tab extends out of the second side face along the second direction, one end of the fourth tab is connected to one second electrode plate, and the other end of the fourth tab extends out of the housing. The fourth tab and the second tab share the head space of the secondary battery, and the plurality of third tabs and the plurality of first tabs share the tail space of the secondary battery. The fourth tab and the plurality of third tabs are electrically connected through the second electrode plates, and the fourth tab extends out of the housing from the second side face without bending, thereby reducing spatial waste caused by transfer welding at the head of the secondary battery, which is conducive to improving the spatial utilization efficiency at the head of the secondary battery and further improving the energy density of the secondary battery.

In some embodiments of this application, along the first direction, a thickness of the secondary battery along the first direction is H1, where H1 ≤ 2.5 mm, so as to meet the size requirements of ultra-thin batteries.

An embodiment of this application further provides an electronic device. The electronic device includes any one of the secondary batteries described in the above embodiments.

In the above secondary battery and the electronic device, the second tab and the second side face are located at the head of the secondary battery, the first side face and the plurality of first tabs are spaced apart from the head of the secondary battery, the second tab and the plurality of first tabs are electrically connected through the first electrode plates, and the second tab extends out of the housing from the second side face without bending, thereby reducing spatial waste caused by transfer welding at the head of the secondary battery, which is conducive to improving the spatial utilization efficiency at the head of the secondary battery and further improving the energy density of the secondary battery.

### BRIEF DESCRIPTION OF DRAWINGS

FIG. 1 is a schematic structural diagram of a secondary battery viewed along a first direction according to an embodiment of this application.
FIG. 2 is a schematic structural diagram of a first tab assembly of the secondary battery according to an embodiment of this application.
FIG. 3 is a schematic structural diagram of connection between a first tab and a first electrode plate of the secondary battery according to an embodiment of this application.
FIG. 4 is a schematic structural diagram of the connection between the first tab and the first electrode plate of the secondary battery according to another embodiment of this application.
FIG. 5 is a schematic structural diagram of the connection between the first tab and the first electrode plate of the secondary battery according to another embodiment of this application.
FIG. 6 is a schematic structural diagram of a first outer electrode plate and a second outer electrode plate of the secondary battery according to an embodiment of this application.
FIG. 7 is a schematic structural diagram of a second tab assembly of the secondary battery according to an embodiment of this application.
FIG. 8 is a schematic structural diagram of the secondary battery viewed along the first direction according to another embodiment of this application.
FIG. 9 is a schematic structural diagram of the secondary battery viewed along the first direction according to another embodiment of this application.
FIG. 10 is a schematic structural diagram of an electronic device according to an embodiment of this application.

**List of reference numerals:**

| | |
|---|---|
| Secondary Battery | 100A, 100B, 100C |
| Electronic device | 200 |
| Electrode assembly | 10 |
| Side face | 11 |
| First side face | 11A |
| First end portion | 11A1 |
| Second end portion | 11A2 |
| Second side face | 11B |
| First reference line | O |
| First surface | 12 |
| Second surface | 13 |
| First electrode plate | 20 |
| First outer electrode plate | 20A |
| Second outer electrode plate | 20B |
| First current collector | 21 |
| Second reference line | E |
| First region | 211 |
| Second region | 212 |
| First active material layer | 22 |
| First groove | 221 |
| Second electrode plate | 30 |
| Separator | 40 |
| First tab assembly | 50 |
| First tab | 51 |
| First portion | 51A |
| Second portion | 51B |
| Second tab | 52 |
| First insulator | 61 |
| Second insulator | 62 |
| Fourth insulator | 64 |
| Housing | 70 |
| Body portion | 71 |
| First wall | 711 |
| Sealing portion | 72 |
| First sealing edge | 721 |
| Tab adhesive | 75 |
| Second tab assembly | 80 |
| Third tab | 81 |
| Third reference line | F |
| Fourth tab | 82 |
| First direction | Z |
| Second direction | X |
| Third direction | Y |

This application is further described below with reference to the following specific embodiments and the foregoing drawings.

### DETAILED DESCRIPTION

The following describes the technical solutions in the embodiments of this application with reference to the drawings hereto. Evidently, the described embodiments are merely a part of but not all of the embodiments of this application.

It is hereby noted that a component considered to be "connected to" another component may be directly connected to the other component or may be connected to the other component through an intermediate component. A component considered to be "disposed on" another component may be directly disposed on the other component or may be disposed on the other component through an intermediate component.

When a value is considered "equal" to another value, it means the two values are equal within a set deviation, where the set deviation range is within 5%. In other words, when at least one of the two values fluctuates within the set deviation range, even if the two values are not equal, they are still deemed substantially equal. When a ratio of a value to another value is considered "1: 1", it means the two values are equal within a set deviation, where the set deviation range is within 5%. In other words, when at least one of the two values fluctuates within the set deviation range, even if the two values are not equal, the ratio is still deemed equal.

Unless otherwise defined, all technical and scientific terms used herein bear the same meanings as what is normally understood by a person skilled in the technical field of this application. The terms used in the specification of this application are merely intended to describe specific embodiments but not to limit this application. The term "and/or" used herein includes any and all combinations of one or more relevant items enumerated. The term "overlap" as used herein refers to the partial overlap of projections of two components or the coincidence of the projections of two components.

An embodiment of this application provides a secondary battery. The secondary battery includes an electrode assembly, a housing and a first tab assembly. The electrode assembly includes first electrode plates, second electrode plates and separators. Each separator is disposed between the corresponding first electrode plate and the corresponding second electrode plate. The electrode assembly is formed by stacking the first electrode plates, the separators and the second electrode plates along a first direction. The first direction is a thickness direction of the electrode assembly. The electrode assembly includes a plurality of sequentially connected side faces, one of which is a first side face and another is a second side face. The electrode assembly is accommodated in the housing. The first tab assembly includes a plurality of first tabs and a second tab. The plurality of first tabs extend out of the first side face, the plurality of first tabs are respectively connected to the first electrode plates, and the plurality of first tabs are electrically connected to each other and accommodated in the housing. The second tab extends out of the second side face along a second direction, one end of the second tab is connected to one first electrode plate, and the other end of the second tab extends out of the housing. The second direction is perpendicular to the first direction.

In the above secondary battery, the second tab and the second side face are located at a head of the secondary battery, the first side face and the plurality of first tabs are spaced apart from the head of the secondary battery, the second tab and the plurality of first tabs are electrically connected through the first electrode plates, and the second tab extends out of the housing from the second side face without bending, thereby reducing spatial waste caused by transfer welding at the head of the secondary battery, which is conducive to improving spatial utilization efficiency at the head of the secondary battery and further improving the energy density of the secondary battery.

The embodiments of this application will be further described below in conjunction with drawings.

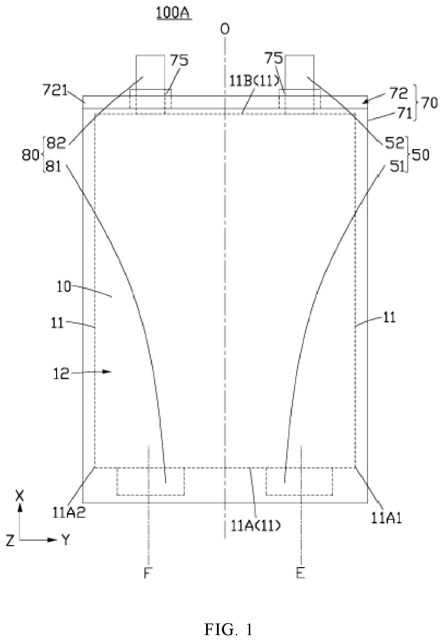

Referring to FIG. 1, an embodiment of this application provides a secondary battery 100A. The secondary battery 100A is a battery that is reusable after an active material is activated by charging the battery that is discharged.

The secondary battery 100A includes an electrode assembly 10, a housing 70 and a first tab assembly 50. The electrode assembly 10 is configured to convert chemical energy into electrical energy. The electrode assembly 10 is accommodated in the housing 70, and the housing 70 is configured to seal the electrode assembly 10.

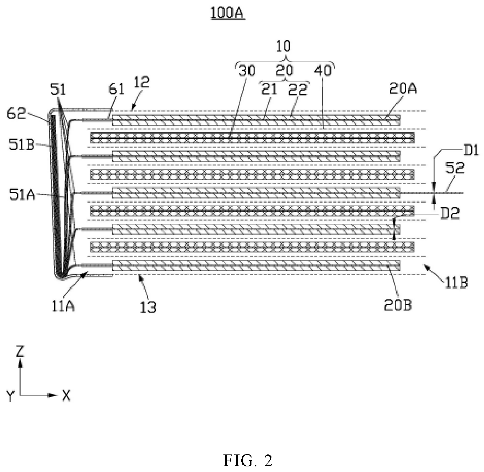

Referring to FIG. 1 and FIG. 2, the electrode assembly 10 includes first electrode plates 20, second electrode plates 30, and separators 40. Each separator 40 is disposed between the corresponding first electrode plate 20 and the corresponding second electrode plate 30. The electrode assembly 10 is formed by stacking the first electrode plates 20, the separators 40 and the second electrode plates 30 along the first direction Z. The first direction Z is a thickness direction of the electrode assembly 10.

When viewed along the first direction Z, the electrode assembly 10 includes a plurality of sequentially connected side faces 11, and each side face 11 is formed by an end face of the corresponding first electrode plate 20, an end surface of the corresponding second electrode plate 30, and an end surface of the corresponding separator 40. One of the side faces 11 is a first side face 11A, and another side face 11 is a second side face 11B.

The first tab assembly 50 includes a plurality of first tabs 51 and one second tab 52. Polarities of the plurality of first tabs 51 are the same as the polarity of the second tab 52. The plurality of first tabs 51 extend out of the first side face 11A. The plurality of first tabs 51 are respectively connected to the first electrode plates 20, and the plurality of first tabs 51 are electrically connected to each other and accommodated in the housing 70. The plurality of first tabs 51 constitute a multi-tab structure of the electrode assembly 10, such that the electrode assembly 10 exhibits low impedance and high rate charging performance.

In some embodiments, the plurality of first tabs 51 are stacked along the first direction Z to improve connection stability of the plurality of first tabs 51. Specifically, ends that are of the plurality of first tabs 51 and that are away from the first electrode plates 20 are connected by welding.

It can be understood that in other embodiments, each first tab 51 is bent toward an adjacent first tab 51, and the two adjacent first tabs 51 are connected by welding.

The second tab 52 extends out of the second side face 11B in a second direction X, one end of the second tab 52 is connected to one first electrode plate 20, and the other end of the second tab 52 extends out of the housing 70 to be electrically connected to an external circuit, such that the plurality of first electrode plates 20 in the electrode assembly 10 are electrically connected to the external circuit. The second direction X is perpendicular to the first direction Z. The position where the second tab 52 extends out of the housing 70 is the head of the secondary battery 100A. The second tab 52 and the second side face 11B are located at the head of the secondary battery 100A, and the second tab 52 extends out of the housing 70 from the second side face 11B without bending, which is conducive to improving the space utilization rate of the head of the secondary battery 100A.

In the above secondary battery 100A, the second tab 52 and the second side face 11B are located at the head of the secondary battery 100A, the first side face 11A and the plurality of first tabs 51 are spaced apart from the head of the secondary battery 100A, the second tab 52 and the plurality of first tabs 51 are electrically connected through the first electrode plates 20, and the second tab 52 extends out of the housing 70 from the second side face 11B without bending, thereby reducing spatial waste caused by transfer welding at the head of the secondary battery, which is conducive to improving the spatial utilization efficiency at the head of the secondary battery 100A and further improving the energy density of the secondary battery 100A.

Still referring to FIG. 1, in some embodiments, when viewed along the first direction Z, the electrode assembly 10 includes four sequentially connected side faces 11, and the four side faces 11 enclose to form an approximately rectangular shape. Optionally, the second direction X is a length direction of the electrode assembly 10, and a third direction Y is a width direction of the electrode assembly 10. The first direction Z, the second direction X, and the third direction Y are perpendicular to each other.

In some embodiments, the portion that is of the housing 70 and that is away from the second tab 52 is a tail of the secondary battery 100A. The first side face 11A and the second side face 11B are oppositely disposed along the second direction X, such that the first side face 11A and the plurality of first tabs 51 are located at the tail of the secondary battery 100A, which facilitates the space utilization of the tail of the secondary battery 100A by the plurality of first tabs 51, and improves the energy density of the secondary battery 100A.

Specifically, when the housing 70 is a packaging bag, at the tail of the secondary battery 100A, the bottom wall of the packaging bag typically retracts inward relative to a side sealing edge of the packaging bag, resulting in space waste. By arranging the plurality of first tabs 51 between the electrode assembly 10 and the bottom wall of the packaging bag, the space retracted inward of the bottom wall of the packaging bag is filled, reducing space waste at the tail of the secondary battery 100A and improving the energy density of the secondary battery 100A.

Still referring to FIG. 2, in some embodiments, the first electrode plate 20 includes a first current collector 21 and a first active material layer 22. The first active material layer 22 is disposed on at least one surface of the first current collector 21 in the first direction Z. The first current collector 21 is configured to collect current. Specifically, the first active material layer 22 is coated on the surface of the first current collector 21 by methods such as extrusion coating, transfer coating, or spray coating.

Optionally, the first current collector 21 is a metal current collector or a composite current collector.

In some embodiments, the plurality of first tabs 51 are integrally formed with the first electrode plates 20 to improve the connection stability between the first tabs 51 and the corresponding first electrode plates 20, which is conducive to reducing internal resistance and has the advantage of simplified manufacturing processes.

Specifically, during the preparation of the first electrode plate 20, coating the first active material layer 22 on the first current collector 21, reserving a region not coated with the first active material layer 22 on the edge of the first current collector 21 adjacent to the first side face 11A, and then die-cutting the region not coated with the first active material layer 22 to form the first tab 51.

Still referring to FIG. 2, in some embodiments, the plurality of first tabs 51 are stacked along the first direction Z and bent to be disposed in the housing 70 to reduce the space occupied by the first tabs 51 in the second direction, thereby improving the energy density of the secondary battery 100A.

Specifically, one ends of the plurality of first tabs 51 are spaced apart along the first direction Z, the other ends of the plurality of first tabs 51 gather to form a first portion 51A and a second portion 51B which are sequentially disposed, the first portion 51A is located on one side of the first side face 11A, and the first portion 51A and the first side face 11A are oppositely disposed along the second direction X. The second portion 51B is bent away from the first side face 11Arelative to the first portion 51A.

In some embodiments, the gathered sections of a plurality of first tabs 51 are bent once to form the first portion 51A and the second portion 51B. Along the second direction X, projections of both the first portion 51A and the second portion 51B are located within the projection range of the first side face 11A, thereby reducing space waste caused by the first tabs 51 protruding from the first side face 11A in the first direction Z and improving the energy density of the secondary battery 100A.

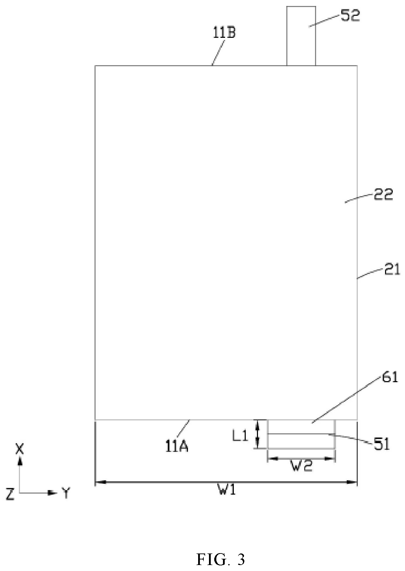

Referring to FIGS. 2 and 3, in some embodiments, along the third direction Y, widths of the first electrode plates 20 and the first tabs 51 connected to each other are W1 and W2, respectively, where 0.1 ≤ W2 / W1 ≤ 0.5, so as to improve the current carrying capability of the first tabs 51, and be conducive to reserving space on the second side face 11B for accommodating another tab assembly with the polarity opposite to that of the first tab assembly 50, and reducing a risk of interference between the first tabs 51 and another tab assembly.

Optionally, W2 / W1 may be one of 0.1, 0.2, 0.3, 0.4, 0.5, or any other value within a range of W2 / W1 ≤ 0.5.

In some embodiments, a ratio of a length by which each first tab 51 extends out of the first side face 11A in an extending direction of the first tab to a thickness of the secondary battery 100A in the first direction Z is less than or equal to 2, so as to facilitate the first portion 51A and the second portion 51B formed by single bending of gathered segments of the plurality of first tabs 51 not to exceed the first side face 11A in the first direction Z, and improve the energy density of the secondary battery 100A.

Specifically, a thickness of the secondary battery 100A in the first direction Z is H1, and the length by which each first tab 51 extends out of the first side face 11A in the extending direction of the first tab is L1, where L1 / H1 ≤ 2, so as to facilitate the first portion 51A and the second portion 51B formed by single bending of gathered segments of the plurality of first tabs 51 not to exceed the first side face 11A in the first direction Z, and improve the energy density of the secondary battery 100A.

Optionally, L1 / H1 may be one of 0.3, 0.4, 0.5, 0.6, 0.7, 0.8, 0.9, 1, 1.1, 1.2, 1.3, 1.4, 1.5, 1.6, 1.7, 1.8, 1.9, 2, or any other value within a range of L1 / H1 ≤ 2.

It should be noted that the lengths of the plurality of first tabs 51 may be the same or different. When the lengths of the plurality of first tabs 51 are different, L1 is the length by which the longest first tab 51 extends out of the first side face 11A. The length L1 by which each first tab 51 extends out of the first side face 11A is measured as follows: unfolding the first tab 51 such that the thickness direction of the first tab 51 is the same as the first direction Z, and at this time, the extending direction of the first tab 51 is the same as the second direction X. By measuring the length of each first tab 51 in the second direction X, the length L1 by which the first tab 51 extends out of the first side face 11A in the extending direction of the first tab can be obtained.

It can be understood that the number of bends in the gathered segments of the plurality of first tabs 51 is not limited to one. In other embodiments, the gathered segments of the plurality of first tabs 51 are subjected to a plurality of bends to form a plurality of portions, thereby reducing space waste caused by the first tabs 51 protruding from the first side face 11A in the first direction Z and improving the energy density of the secondary battery 100A.

Optionally, the number of bends of the gathered segments of the plurality of first tabs 51 may be 2, 3, 4, 5, etc.

Furthermore, the plurality of first tabs 51 are stacked along the first direction Z, the ratio of the length by which each first tab 51 extends out of the first side face 11A in the extending direction of the first tab to the thickness of the secondary battery 100A in the first direction Z is 0.5 to 2, such that the ends that are of the plurality of first tabs 51 and that are away from the first electrode plates 20 can be connected by welding. Specifically, 0.5 ≤ L1 / H1 ≤ 2.

Still referring to FIG. 2 and FIG. 3, in some embodiments, the secondary battery 100A further includes a plurality of first insulators 61, and the first insulators 61 are disposed on at least one surface in the first direction Z of the first tabs 51 to reduce a risk of short circuits caused by contact between the first tabs 51 and the second electrode plates 30 adjacent thereto.

Optionally, the first insulators 61 are disposed on at least one surface in the first direction Z of the portions of the first tabs 51 close to the first electrode plates 20.

Optionally, the first insulators 61 are disposed on both surfaces of each first tab 51 in the first direction Z.

Optionally, the first insulators 61 are insulating coatings. The insulating coatings include inorganic particles and a binder. The binder includes at least one of polyvinylidene fluoride, polyacrylonitrile, sodium carboxymethyl cellulose, polyacrylic acid, polyvinyl alcohol, or polytetrafluoroethylene. The inorganic particles may include, but are not limited to, at least one of silica (SiO₂), boehmite (γ-AlOOH), diaspore (α-AlO(OH), or aluminum oxide (Al₂O₃).

Still referring to FIG. 2, in some embodiments, the electrode assembly 10 includes a first surface 12 and a second surface 13, the first surface 12 and the second surface 13 are oppositely disposed along the first direction Z, and the plurality of side faces 11 are located between the first surface 12 and the second surface 13. Specifically, the first surface 12 may be a surface of any one of the first electrode plates 20, the second electrode plates 30, and the separators 40 in the first direction Z. The second surface 13 may be a surface of any one of the first electrode plates 20, the second electrode plates 30, and the separators 40 in the first direction Z.

The secondary battery 100A further includes a second insulator 62. One end of the second insulator 62 is connected to the first surface 12, and the other end of the second insulator 62 bypasses the first side face 11A and is connected to the second surface 13. The second insulator 62 further wraps the plurality of first tabs 51 to improve structural stability of the plurality of first tabs 51 on the first side face 11A and improve insulation stability between the plurality of first tabs 51 and other structural components.

Still referring to FIG. 2 and FIG. 3, in some embodiments, the plurality of second tabs 52 are integrally formed with the first electrode plates 20 to improve the connection stability between the second tabs 52 and the corresponding first electrode plates 20, which is conducive to reducing internal resistance and has the advantage of simplified manufacturing processes.

Specifically, during the preparation of the first electrode plate 20, coating the first active material layer 22 on the first current collector 21, reserving a region not coated with the first active material layer 22 on the edge of the first current collector 21 adjacent to the second side face 11B, and then die-cutting the region not coated with the first active material layer 22 to form the second tab 52.

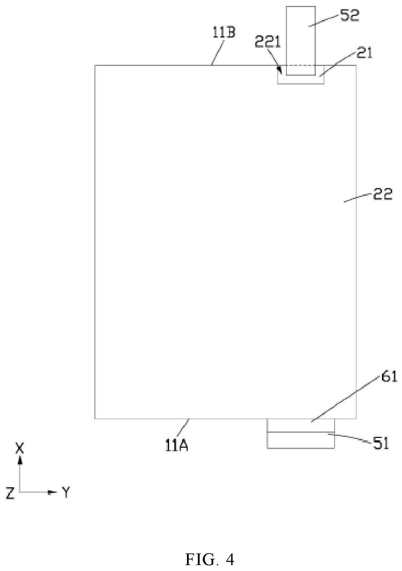

Referring to FIG. 4, in some embodiments, the first active material layer 22 is provided with a first groove 221 exposing the first current collector 21, and one end of the second tab 52 is located in the first groove 221 and connected to the first current collector 21. The second tab 52 shares a space in the first direction Z with the first active material layer 22 to improve the spatial utilization efficiency at the head of the secondary battery 100A, thereby improving the energy density of the secondary battery 100A.

Optionally, the portion that is of the first active material layer 22 and that is close to the second side face 11B is provided with the first groove 221 exposing the first current collector 21.

Optionally, the first groove 221 is formed by laser etching on the first active material layer 22.

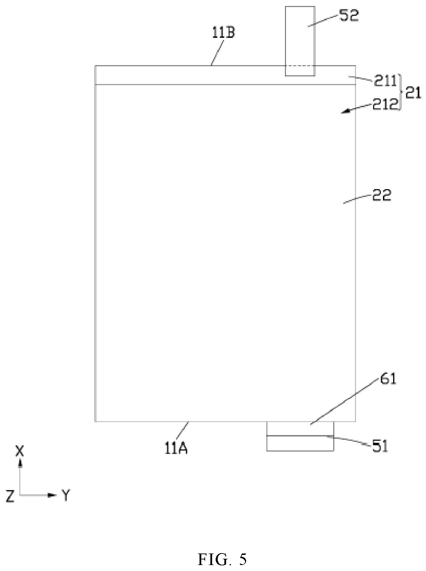

Referring to FIG. 5, in some embodiments, the first current collector 21 includes a first region 211 and a second region 212 connected to each other, and the first region 211 is closer to the second side face 11B compared to the second region 212. The first active material layer 22 is not disposed on both surfaces of the first region 211 in the first direction Z, and the first active material layer 22 is disposed on at least one surface of the second region 212 in the first direction Z. One end of the second tab 52 is connected to the first region 211. The first active material layer 22 is not disposed on both surfaces in the first direction Z of the first region 211 so as to facilitate the connection between the second tab 52 and the first current collector 21.

Still referring to FIG. 2, in some embodiments, along the first direction Z, a thickness of the first current collector 21 of the first electrode plate 20 connected to the first tab 51 and the second tab 52 is D1, and a thickness of the first current collector 21 of the first electrode plate 20 connected to the first tab 51 but not connected to the second tab 52 is D2, where D1 / D2 > 1. When D1 / D2 ≤ 1, the thickness of the first current collector 21 of the first electrode plate 20 connected to the first tab 51 and the second tab 52 is relatively small, resulting in weak current carrying capability and affecting the cycle performance. By defining D1 / D2 > 1, the cycle performance of the secondary battery 100A is improved.

Furthermore, D1 / D2 ≤ 2.5. When D1 / D2 > 2.5, the thickness of the first current collector 21 of the first electrode plate 20 connected to the first tab 51 and the second tab 52 is relatively large, resulting in no significant improvement of the cycle performance and loss of the energy density. By limiting D1 / D2 ≤ 2.5, the energy density of the secondary battery 100A is improved.

Optionally, D1 / D2 may be one of 1.1, 1.2, 1.3, 1.4, 1.5, 1.6, 1.7, 1.8, 1.9, 2, 2.1, 2.2, 2.3, 2.4, 2.5, or any other value within a range of 1 < D1 / D2 ≤ 2.5.

In some embodiments, the thickness of the second tab 52 is greater than that of each first tab 51, so as to improve the current carrying capability of the second tab 52, thereby improving the stability of the electrical connection between the second tab 52 and an external circuit.

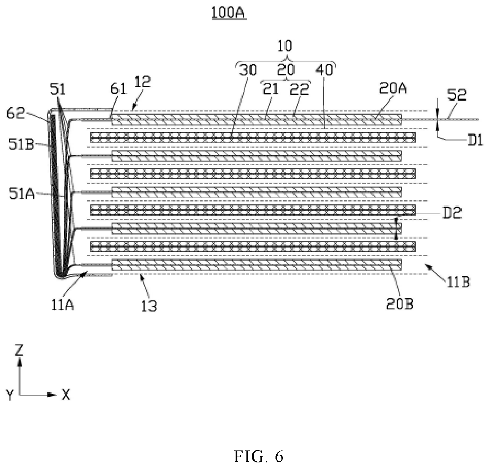

Referring to FIG. 6, in some embodiments, along the first direction Z, the two first electrode plates 20 located on the outermost two sides of the electrode assembly 10 are respectively a first outer electrode plate 20A and a second outer electrode plate 20B. Along the first direction Z, the first outer electrode plate 20A is closer to the first surface 12 than the second outer electrode plate 20B, and the second outer electrode plate 20B is closer to the second surface 13 than the first outer electrode plate 20A. One end of the second tab 52 is connected to the first outer electrode plate 20A or the second outer electrode plate 20B, so as to facilitate heat dissipation of the second tab 52 and improve the safety of the secondary battery 100A.

Moreover, during the preparation of the electrode assembly 10, the thicknesses of the first current collectors 21 of the first outer electrode plate 20A and the second outer electrode plate 20B are greater than those of the first current collectors 21 of other first electrode plates 20, so as to improve the structural stability of the first outer electrode plate 20A and the second outer electrode plate 20B, thereby reducing a risk of the electrode assembly 10 being punctured and causing short circuits under external force. By connecting one end of the second tab 52 to the first outer electrode plate 20A or the second outer electrode plate 20B, the current carrying performance of the first current collector 21 connected to the first tab 51 and the second tab 52 can also be improved, which is conducive to improve the cycle performance of the secondary battery 100A.

In some embodiments, the first electrode plates 20 are positive electrode plates, and the first current collectors 21 are made of aluminum foil. Correspondingly, the thicknesses of the first current collectors 21 of the first outer electrode plate 20A and the second outer electrode plate 20B are greater than or equal to 10 µm.

In some embodiments, the first electrode plates 20 are negative electrode plates, and the first current collectors 21 are made of copper foil. The thicknesses of the first current collectors 21 of the first outer electrode plate 20A and the second outer electrode plate 20B are greater than or equal to 6 µm.

Still referring to FIG. 1, in some embodiments, the housing 70 is a packaging bag, and the housing 70 includes a body portion 71 and a sealing portion 72. Specifically, the body portion 71 refers to the portion of a sealing film where a pit is formed, and the sealing portion 72 refers to the portion where the sealing film is folded and overlapped for bonding. The electrode assembly 10 and the plurality of first tabs 51 are accommodated in the body portion 71. The body portion 71 includes a first wall 711 disposed opposite to the second side face 11B along the second direction X. The sealing portion 72 includes a first sealing edge 721, the first sealing edge 721 is connected to the first wall 711 and extends along the second direction X, and the second tab 52 extends out of the first sealing edge 721 so as to facilitate electrical connection with the external circuit.

In some embodiments, the secondary battery 100A further includes a tab adhesive 75, and the tab adhesive 75 is located on the first sealing edge 721 and wraps the second tab 52 so as to improve the sealing stability of the first sealing edge 721.

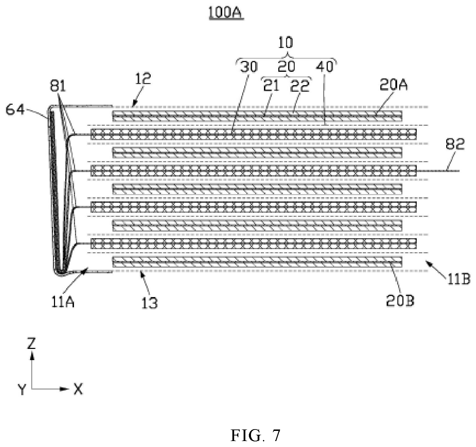

Referring to FIG. 1 and FIG. 7 together, in some embodiments, the secondary battery 100A further includes a second tab assembly 80. The polarity of the second tab assembly 80 is opposite to that of the first tab assembly 50. The second tab assembly includes a plurality of third tabs 81 and a fourth tab 82. The polarity of the third tabs 81 is the same as that of the fourth tab 82. The plurality of third tabs 81 extend out of the first side face 11A, the plurality of third tabs 81 are respectively connected to the second electrode plates 30, and the plurality of third tabs 81 are electrically connected to each other and accommodated in the housing 70. The fourth tab 82 extends out of the second side face 11B in the second direction X, one end of the fourth tab 82 is connected to one second electrode plate 30, and the other end of the fourth tab 82 extends out of the housing 70 to be electrically connected to the external circuit, such that the plurality of second electrode plates 30 in the electrode assembly 10 are electrically connected to the external circuit. The fourth tab 82 and the second tab 52 share the head space of the secondary battery 100A, and the plurality of third tabs 81 and the plurality of first tabs 51 share the tail space of the secondary battery 100A. The fourth tab 82 and the plurality of third tabs 81 are electrically connected through the second electrode plates 30, and the fourth tab 82 extends out of the housing 70 from the second side face 11B without bending, thereby reducing spatial waste caused by transfer welding at the head of the secondary battery, which is conducive to improving the spatial utilization efficiency at the head of the secondary battery 100A and further improving the energy density of the secondary battery 100A.

It can be understood that the structure of the third tabs 81 may refer to the structure of the first tabs 51, and the connection method between the third tabs 81 and the second electrode plates 30 may refer to the connection method between the first tabs 51 and the first electrode plates 20.

In some embodiments, the secondary battery 100A further includes a plurality of fourth insulators 64. One end of each fourth insulator 64 is connected to the first surface 12, and the other end of the fourth insulator 64 bypasses the first side face 11A and is connected to the second surface 13. The fourth insulators 64 further wrap the plurality of third tabs 81 so as to improve the structural stability of the plurality of third tabs 81 on the first side face 11A and improve the insulation stability between the plurality of third tabs 81 and other structural components.

Still referring to FIG. 1, in some embodiments, when viewed along the first direction Z, a first reference line O extends along the second direction X and passes through the midpoint of the second side face 11B in the second direction X. The first tabs 51 and the third tabs 81 are located on two sides of the first reference line O, so as to reduce a risk of interference between the first tabs 51 and the third tabs 81.

In some embodiments, when viewed along the first direction Z, the second side face 11B includes a first end portion 11A1 and a second end portion 11A2. The first tabs 51 are located between the first end portion 11A1 and the first reference line O, and the third tabs 81 are located between the second end portion 11A2 and the first reference line O. A second reference line E extends along the third direction Y and passes through the midpoint of the first tabs 51 in the second direction X, and a third reference line F extends along the third direction Y and passes through the midpoint of the third tabs 81 in the second direction X.

Along the second direction X, a distance between the second reference line E and the first reference line O is less than a distance between the second reference line E and the first end portion 11A1, such that the first tabs 51 are close to the middle positions of the first electrode plates 20, which is conducive to making the current of the first electrode plates 20 uniformly distributed, ensuring the uniform current density of the first electrode plates 20, and further improving the cycle performance of the secondary battery 100A.

Along the second direction X, a distance between the third reference line F and the first reference line O is less than a distance between the third reference line F and the second end portion 11A2, such that the third tabs 81 are close to the middle positions of the second electrode plates 30, which is conducive to making the current of the second electrode plates 30 uniformly distributed, ensuring the uniform current density of the second electrode plates 30, and further improving the cycle performance of the secondary battery 100A.

In some embodiments, along the first direction Z, a thickness of the secondary battery 100A is H1, where H1 ≤ 2.5 mm, so as to meet the size requirements of ultra-thin batteries. Typically, ultra-thin battery cells have fewer layers of electrode plates. The second tab 52 and the second side face 11B are located at the head of the secondary battery 100A, the first side face 11A and the plurality of first tabs 51 are separated from the head of the secondary battery 100A, the second tab 52 and the plurality of first tabs 51 are electrically connected through the first electrode plates 20, and the second tab 52 does not need to be bent to extend out of the housing 70 from the second side face 11B, thereby reducing space waste caused by transfer welding at the head of the secondary battery, being conducive to improving the space utilization rate of the head of the secondary battery 100A, and being conducive to improving the production yield and manufacturability.

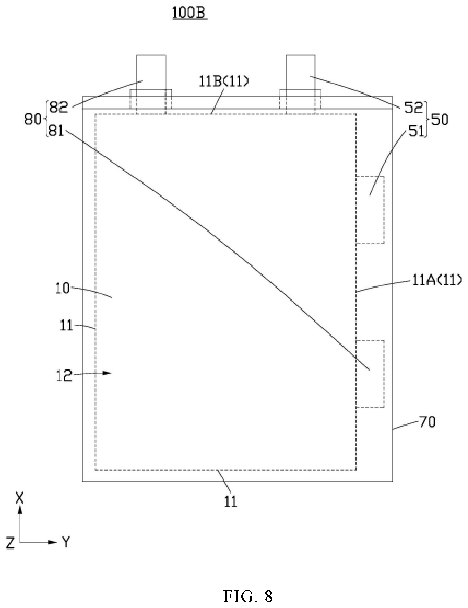

Referring to FIG. 8, an embodiment of this application further provides a secondary battery 100B. The secondary battery 100B differs from the secondary battery 100A in that the positions of a first side face 11A and a second side face 11B are different. Correspondingly, the positions of a second tab 52 and third tabs 81 are also adaptively adjusted.

In some embodiments of this application, the first side face 11A and the second side face 11B are adjacently disposed, such that the first side face 11A and a plurality of first tabs 51 are located at the side of the secondary battery 100B, facilitating the space utilization of the side portion of the secondary battery 100B by the plurality of first tabs 51 and improving the energy density of the secondary battery 100B.

Apart from the above differences, the parameters of the secondary battery 100B are substantially the same as those of the secondary battery 100A, and reference may be made to the description of the secondary battery 100A above.

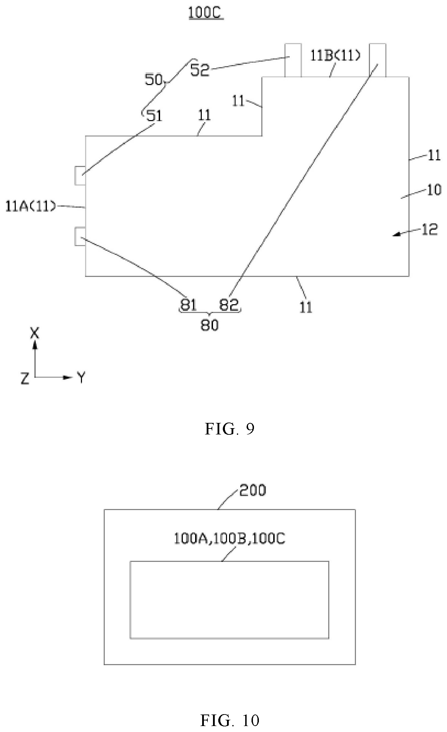

Referring to FIG. 9, an embodiment of this application further provides a secondary battery 100C. The secondary battery 100C differs from the secondary battery 100A in that the shape of an electrode assembly 10 is different. Correspondingly, the positions of the first tab assembly 50 and the second tab assembly 80 are adaptively adjusted.

In some embodiments, when viewed along the first direction Z, the electrode assembly 10 includes a plurality of sequentially connected side faces 11, and the plurality of side faces 11 enclose to form a non-rectangular shape. Except for a second side face 11B, the length of a first side face 11A does not exceed the longest length of the other side faces 11, such that first tabs 51 are located at a short side of the electrode assembly 10, which is conducive to reducing the space waste generated on both sides of the first tabs 51 and improving the energy density of the secondary battery 100C.

Specifically, the electrode assembly 10 includes six sequentially connected side faces 11, and the six side faces 11 enclose to form an L shape.

It can be understood that in some embodiments, the number of side faces 11 may also be 3, 5, 7, 8, etc.

Apart from the above differences, the parameters of the secondary battery 100C are substantially the same as those of the secondary battery 100A, and reference may be made to the description of the secondary battery 100A above.

Referring to FIG. 10, an embodiment of this application further provides an electronic device 200. The electronic device 200 includes the secondary battery 100 according to any one of the above embodiments. Optionally, the electronic device 200 may be a vehicle, a mobile phone, a portable device, a notebook computer, a ship, a spacecraft, an electric toy, an electric tool, or the like.

The following provides a detailed description of the secondary battery 100 in the embodiments and comparative embodiment.

### 1. Energy density test of a secondary battery:

An energy density test method for a secondary battery includes dividing the energy value by the volume of the secondary battery. Setting the energy value as the product of the capacity and voltage of the secondary battery. Setting the volume of the secondary battery as the product of the initial length, width, and thickness of the secondary battery, i.e., the product of the length, width, and thickness of the secondary battery before cycling, so as to reduce errors in the test result caused by thickness changes after cycling of the secondary battery. Obtaining the energy density through the test method as the initial energy density of the secondary battery. Measuring the thickness of the secondary battery using a parallel plate gauge (PPG), specifically by placing the secondary battery between two slabs and applying a certain pressure, typically with a weight of 650±50 g, and then measuring a distance between the two slabs, which is the thickness of the secondary battery.

### 2. Cycle performance test of a secondary battery:

Charging the battery cell at 25° C with a conventional 0.5 C constant current to 4.5 V, charging the battery at a constant voltage until the current reaches 0.05 C. Leaving the battery to stand for 5 minutes, and then discharging the battery at a current of 0.5 C. The capacity retention rate is calculated after 1000 cycles, which is the discharge capacity at the 1000th cycle divided by the initial capacity.

### Embodiment 1:

A secondary battery with an initial thickness of 5.9 mm at 50% SOC, a length of 100 mm, and a width of 50 mm, is assembled as follows:
(1) Preparation of a negative electrode plate: Mixing negative active materials artificial graphite, conductive carbon black (Super P), and styrenebutadiene rubber (SBR) at a weight ratio of 96 : 1.5 : 2.5, adding deionized water as a solvent to prepare a slurry with a weight percentage of 50 wt%, and stirring uniformly. First attaching a piece of styrofoam to a portion of the surface of negative current collector copper foil with a thickness of 6 µm, then uniformly coating the slurry onto one surface of the copper foil, heating to detach the styrofoam so as to expose a portion of the surface of the copper foil, and then drying at 110° C so as to obtain a negative electrode plate with a single side coated with a negative active material layer. When preparing a double-sided coated negative electrode plate, repeating the above steps on the other surface of the negative electrode plate to obtain a negative electrode plate with double sides coated with the negative active material layers. Then performing cold pressing on the coated electrode plate to a thickness of 105 µm, die-cutting first tabs on the copper foil exposed by the styrofoam, and welding a second tab, where the first tabs and the second tab are made of copper, and the plurality of first tabs are stacked along the thickness direction of the electrode assembly.µ
(2) Preparation of a positive electrode plate: Mixing positive active materials lithium cobalt oxide (LiCoO₂), conductive carbon black (Super P), and polyvinylidene difluoride (PVDF) at a weight ratio of 97.5 : 1.0 : 1.5, adding N-methyl-pyrrolidone (NMP) as a solvent to prepare a slurry with a solid content of 75 wt%, and stirring uniformly. Uniformly coating the slurry on one surface of aluminum foil, and then drying at 90° C to obtain a positive electrode plate with a single side coated with a positive active material. When preparing a double-sided coated positive electrode plate, repeating the above coating steps on the other surface of the aluminum foil. Then performing cold pressing on the coated electrode plate to a thickness of 95 µm, die-cutting third tabs on a blank region at the edge of the aluminum foil, and welding a fourth tab, where the third tabs and the fourth tab are made of aluminum.µ
(3) Preparation of an electrolyte solution: In a dry argon gas atmosphere, first mixing ethylene carbonate (EC), ethyl methyl carbonate (EMC) and diethyl carbonate (DEC) at a mass ratio EC : EMC : DEC = 30 : 50 : 20 to form a basic organic solvent, and then adding lithium salt lithium hexafluorophosphate (LiPF₆) to the basic organic solvent, dissolving and mixing uniformly, and obtaining an electrolyte solution with a lithium salt concentration of 1.15 mol/L.
(4) Preparation of a separator: Using a 7-micron-thick porous polyethylene polymer film as the separator.
(5) Preparation of an electrode assembly: Stacking the positive electrode plates, the separators, and the negative electrode plates, bending the gathered segments of the plurality of first tabs once, and bending the gathered segments of the plurality of third tabs once.
(6) Assembly of an electrode assembly: Placing a punch-molded aluminum laminated film into an assembly fixture with the pit surface facing upward, positioning the electrode assembly in the pit, and applying external force to compress the electrode assembly. Then, covering the electrode assembly with another punch-molded aluminum laminated film with the pit surface facing downward, and the heat-sealing peripheries of the two aluminum laminated films by hot pressing to obtain the assembled electrode assembly.
(7) Liquid injection and sealing: Injecting the electrolyte solution into the assembled electrode assembly, performing processes such as vacuum sealing, standing, hot-press formation, and shaping to obtain the secondary battery.

Comparative embodiment 1: A plurality of tabs are disposed on one side of an electrode assembly, and the plurality of tabs are folded and then transfer-welded to conductive terminals to extend out of a housing. It should be noted that Comparative Embodiment 1 has the same parameters as Embodiment 1 except for the structure of the tabs.

**Table 1**

| (Embodiments 2-14 have the same parameters as Embodiment 1 except for those involved in Table 1.) | | | | | |
|---|---|---|---|---|---|
| Serial Number | W2/W1 | L1/H1 | D1/D2 | Cycle performance | Energy density (Wh/L) |
| Comparative Embodiment 1 | \ | \ | \ | 82.0% | 761 |
| Embodiment 1 | 0.05 | 2 | 1.5 | 82.5% | 779 |
| Embodiment 2 | 0.1 | 2 | 1.5 | 84.9% | 779 |
| Embodiment 3 | 0.2 | 2 | 1.5 | 85.0% | 779 |
| Embodiment 4 | 0.3 | 2 | 1.5 | 86.2% | 779 |
| Embodiment 5 | 0.4 | 2 | 1.5 | 86.7% | 779 |
| Embodiment 6 | 0.5 | 2 | 1.5 | 87.1% | 779 |
| Embodiment 7 | 0.5 | 0.5 | 1.5 | 86.0% | 785 |
| Embodiment 8 | 0.5 | 1 | 1.5 | 86.6% | 785 |
| Embodiment 9 | 0.5 | 1.5 | 1.5 | 86.8% | 779 |
| Embodiment 10 | 0.5 | 2.5 | 1.5 | 87.4% | 776 |
| Embodiment 11 | 0.5 | 2 | 0.8 | 85.5% | 784 |
| Embodiment 12 | 0.5 | 2 | 1 | 86.4% | 783 |
| Embodiment 13 | 0.5 | 2 | 1.2 | 86.8% | 781 |
| Embodiment 14 | 0.5 | 2 | 1.8 | 87.5% | 775 |
| Embodiment 15 | 0.5 | 2 | 2.5 | 87.5% | 761 |

From Comparative Embodiment 1 and Embodiments 1-15, it can be seen that the plurality of first tabs 51 extend out of the first side face 11A, the plurality of first tabs 51 are connected to the first electrode plates 20 respectively, the plurality of first tabs 51 are electrically connected to each other and accommodated in the housing 70, the second tab 52 extends out of the second side face 11B along the second direction X, one end of the second tab 52 is connected to one first electrode plate 20, and the other end of the second tab 52 extends out of the housing 70, such that the energy density of the secondary battery can be improved.

From Embodiments 1-6, it can be seen that by defining 0.1 ≤ W2 / W1 ≤ 0.5, the cycle performance of the secondary battery can be improved. It should be noted that when W2 / W1 > 0.5, the first tabs 51 may interfere with another tab assembly of the opposite polarity, which is not conducive to welding the first tabs 51 to the first electrode plates 20 and may also increase the risk of short circuits. Therefore, no embodiment with W2 / W1 > 0.5 is provided in Table 1.

From Embodiments 6 and 7-10, it can be seen that by defining 0.5 ≤ L1 / H1 ≤ 2, the energy density of the secondary battery can be improved. It should be noted that when L1 / H1 < 0.5, the plurality of first tabs 51 cannot be stacked along the thickness direction of the secondary battery, that is, the plurality of first tabs 51 cannot be gathered for welding. Therefore, no embodiment with L1 / H1 < 0.5 is provided in Table 1.

From Embodiments 6 and 11-15, it can be seen that when the thickness of the first current collector 21 of the first electrode plate 20 connected to the first tab 51 and the second tab 52 is small, the current carrying capability is weak, and the cycle performance is affected. When the thickness of the first current collector 21 of the first electrode plate 20 connected to the first tab 51 and the second tab 52 is large, the improvement in cycle performance is not significant, and the energy density is lost. By defining 1 < D1 / / D2 ≤ 2.5, the cycle performance and energy density of the secondary battery 100A can be improved.

In summary, in the above secondary batteries 100A, 100B, 100C, the second tab 52 and the second side face 11B are located at the head of the secondary batteries 100A, 100B, 100C, the first side face 11A and the plurality of first tabs 51 are separated from the head of the secondary batteries 100A, 100B, 100C, the second tab 52 and the plurality of first tabs 51 are electrically connected through the first electrode plates 20, and the second tab 52 extends out of the housing 70 from the second side face 11B without bending, thereby reducing space waste caused by transfer welding at the head of the secondary battery, being conducive to improving the space utilization rate of the head of the secondary batteries 100A, 100B, 100C, and further improving the energy density of the secondary batteries 100A, 100B, 100C.

## Claims

1. A secondary battery, **characterized in that** the secondary battery comprises:
an electrode assembly, wherein the electrode assembly comprises first electrode plates, second electrode plates, and separators; each separator is disposed between the corresponding first electrode plate and the corresponding second electrode plate; the electrode assembly is formed by stacking the first electrode plates, the separators, and the second electrode plates along a first direction; the first direction is a thickness direction of the electrode assembly, the electrode assembly comprises a plurality of sequentially connected side faces, one of the side faces is a first side face and another is a second side face;
a housing, wherein the electrode assembly is accommodated in the housing; and
a first tab assembly, wherein the first tab assembly comprises a plurality of first tabs and a second tab, the plurality of first tabs extend out of the first side face, the plurality of first tabs are respectively connected to the first electrode plates, the plurality of first tabs are electrically connected to each other and accommodated in the housing, the second tab extends out of the second side face along a second direction, one end of the second tab is connected to one of the first electrode plates, the other end of the second tab extends out of the housing, and the second direction is perpendicular to the first direction.

2. The secondary battery according to claim 1, **characterized in that** the plurality of first tabs are integrally formed with the first electrode plates.

3. The secondary battery according to claim 1 or 2, **characterized in that** each first electrode plate comprises a first current collector and a first active material layer, the first active material layer is disposed on at least one surface in the first direction of the first current collector, the first active material layer is provided with a first groove exposing the first current collector, and one end of the second tab is located in the first groove and connected to the first current collector.

4. The secondary battery according to claim 1 or 2, **characterized in that** each first electrode plate comprises a first current collector and a first active material layer, the first current collector comprises a first region and a second region connected to each other, the first region is closer to the second side face than the second region, the first active material layer is not disposed on both surfaces in the first direction of the first region, the first active material layer is disposed on at least one surface in the first direction of the second region, and one end of the second tab is connected to the first region.

5. The secondary battery according to claim 1 or 2, **characterized in that** the second tab is integrally formed with the first electrode plate.

6. The secondary battery according to claim 1, **characterized in that** along the second direction, the first side face and the second side face are oppositely disposed along the second direction.

7. The secondary battery according to claim 1, **characterized in that** the first side face and the second side face are adjacently disposed.

8. The secondary battery according to claim 1, **characterized in that** the plurality of first tabs are stacked along the first direction, and the plurality of first tabs are bent to be disposed in the housing.

9. The secondary battery according to claim 1, **characterized in that** the first direction, the second direction, and a third direction are perpendicular to one another; and along the third direction, widths of the first electrode plates and the first tabs connected to each other are W1 and W2, respectively, wherein 0.1 ≤ W2 / W1 ≤ 0.5; and/or,
a ratio of a length by which each first tab extends out of the first side face in an extending direction of the first tab to a thickness of the secondary battery in the first direction is less than or equal to 2.

10. The secondary battery according to claim 9, **characterized in that** the plurality of first tabs are stacked along the first direction, and the ratio of the length by which each first tab extends out of the first side face in the extending direction of the first tab to the thickness of the secondary battery in the first direction is 0.5 to 2.

11. The secondary battery according to claim 1, **characterized in that** the secondary battery further comprises a plurality of first insulators, and the first insulators are disposed on at least one surface in the first direction of the first tabs.

12. The secondary battery according to claim 11, **characterized in that** the first insulators are insulating coatings, the insulating coatings comprise inorganic particles and a binder; the binder comprises at least one of polyvinylidene fluoride, polyacrylonitrile, sodium carboxymethyl cellulose, polyacrylic acid, polyvinyl alcohol, or polytetrafluoroethylene, and the inorganic particles comprise at least one of silica, boehmite, diaspore, or aluminum oxide.

13. The secondary battery according to claim 1, **characterized in that** the electrode assembly comprises a first surface and a second surface, and the first surface and the second surface are oppositely disposed along the first direction; and
the secondary battery further comprises a second insulator, one end of the second insulator is connected to the first surface, the other end of the second insulator bypasses the first side face and is connected to the second surface, and the second insulator further wraps the plurality of first tabs.

14. The secondary battery according to claim 1, **characterized in that** each first electrode plate comprises a first current collector and a first active material layer, and the first active material layer is disposed on at least one surface in the first direction of the first current collector; and
along the first direction, a thickness of the first current collector of the first electrode plate connected to the first tab and the second tab is D1, and a thickness of the first current collector of the first electrode plate connected to the first tab but not connected to the second tab is D2, wherein D1 / D2 > 1.

15. The secondary battery according to claim 14, **characterized in that** D1 / D2 ≤ 2.5.

16. The secondary battery according to claim 1, **characterized in that** a thickness of the second tab is greater than a thickness of each first tab.

17. The secondary battery according to claim 1, **characterized in that** along the first direction, the two first electrode plates located on the outermost two sides of the electrode assembly are a first outer electrode plate and a second outer electrode plate, respectively; and one end of the second tab is connected to the first outer electrode plate or the second outer electrode plate.

18. The secondary battery according to claim 1, **characterized in that** the housing is a packaging bag, the housing comprises a body portion and a sealing portion, the electrode assembly and the plurality of first tabs are accommodated in the body portion, the body portion comprises a first wall opposite to the second side face along the second direction, the sealing portion comprises a first sealing edge, the first sealing edge is connected to the first wall, and the second tab extends out of the first sealing edge.

19. The secondary battery according to claim 1, **characterized in that** the secondary battery further comprises a second tab assembly, the second tab assembly comprises a plurality of third tabs and a fourth tab, the plurality of third tabs extend out of the first side face, the plurality of third tabs are respectively connected to the second electrode plates, the plurality of third tabs are electrically connected to each other and accommodated in the housing, the fourth tab extends out of the second side face along the second direction, one end of the fourth tab is connected to one of the second electrode plates, and the other end of the fourth tab extends out of the housing.

20. The secondary battery according to claim 1, **characterized in that** along the first direction, a thickness of the secondary battery is H1, wherein H1 ≤ 2.5 mm.

21. An electronic device, **characterized in that** the electronic device comprises the secondary battery according to any one of claims 1 to 20.
